# FASCICULE DE BREVET EUROPEEN

(11) **EP 1 254 694 B1**
(45) Date de publication et mention de la délivrance du brevet: **12.10.2011**
(21) Numéro de dépôt: 02291070.7
(22) Date de dépôt: 26.04.2002
(51) Int. Cl.: B01D 46/52, B01D 46/42

(54) **Procédé de montage d'un dispositif de filtration destiné à équiper un appareil de circulation d'air, en particulier pour véhicule automobile**
Verfahren zur Herstellung einer Filtervorrichtung für Luftumlaufanlage insbesondere für Kraftfahrzeug
Process for mounting a filter device for an air circulation system especially for motor vehicle

(30) Priorité: 30.04.2001 FR 0105820
(43) Date de publication de la demande: 06.11.2002
(73) Titulaire: Valeo Matériaux de Friction, 87020 Limoges cedex 9 (FR)
(72) Inventeur: Simon, Olivier, 14123 Ifs (FR); Fontaine, Arnaud, 50880 La Meauffe (FR)
(74) Mandataire: Benoit, Monique

(56) Documents cités:
- DE-U- 29 705 065
- US-A- 3 707 046
- US-A- 5 704 953

## Description

La présente invention concerne un procédé de montage avec étanchéité d'un dispositif de filtration destiné à équiper un appareil de circulation d'air, par exemple d'aération ou de chauffage ou de climatisation, en particulier pour véhicule automobile.

Elle se rapporte plus précisément à un procédé de montage avec étanchéité d'un dispositif de filtration interchangeable destiné à équiper un appareil de circulation d'air, en particulier pour véhicule automobile, dans un boîtier recevant ce dispositif de façon étanche et comportant au moins une rainure dans laquelle est emboîté un bord du dispositif de filtration sur toute son épaisseur sur au moins une partie de sa périphérie.

Un boîtier recevant un dispositif de filtration interchangeable et comportant au moins une rainure dans laquelle est emboîté un bord du dispositif de filtration est connu de US5704953A.

Selon un mode de réalisation selon l'art antérieur, un moyen d'étanchéité et de positionnement est constitué d'un joint en mousse collé sur les bords du dispositif de filtration et venant en contact avec le boîtier dans un état comprimé sur le fond de la rainure.

Cet agencement est particulièrement coûteux en matériau et peut se détériorer relativement rapidement lors de son utilisation.

Il est également connu de réaliser le guidage en translation du dispositif de filtration dans le boîtier par un agencement de rail et glissière, constitué d'une nervure de petite dimension tranversale réalisée sur le bord des faces latérales du dispositif d'étanchéité et venant coopérer avec une rainure réalisée quant à elle dans le fond de la rainure et de taille correspondante.

Un tel agencement constitue une étanchéité latérale relativement correcte fonctionnant sur le principe d'une étanchéité par labyrinthe, mais pose des problèmes de fabrication. En effet, il nécessite une fabrication du boîtier avec des tolérances strictes afin d'obtenir un fond de rainure parfaitement plan et parallèle aux bords du dispositif de filtration.

Il n'est donc pas réalisable dans tous les cas de procédé de moulage du boîtier. Par exemple, si ce dernier est moulé en deux parties assemblées selon un plan de jonction perpendiculaire à cette rainure, le moulage nécessite une dépouille de moulage entrainant une différence de côtes d'environ 5 mm, pour des dimensions classiques, entre les largeurs d'extrémité de ces parties, la largeur étant la dimension perpendiculaire à la rainure.

Un agencement de rail comme précédemment décrit n'est dans ce cas pas réalisable car la nervure n'entrerait pas dans la rainure de glissière sur toute la profondeur du boîtier et entraînerait donc non seulement un mauvais positionnement du dispositif de filtration mais des fuites et une étanchéité nulle.

L'invention résout ces problèmes tout en proposant un procédé de montage de fabrication particulièrement simple et un moyen d'étanchéité efficace et résistant.

Pour ce faire, conformément à l'invention, un positionnement du dispositif de filtration est obtenu grâce à au moins un moyen de calage du dispositif de filtration adapté pour garantir un emboîtement minimal du dispositif sur la rainure.

Grâce à ce procédé de montage, le contact minimal est défini pour obtenir une étanchéité par labyrinthe. L'effet d'étanchéité est obtenu par cheminement en tronçons de trajectoire de la fuite perpendiculaires les uns aux autres.

Ce procédé est particulièrement simple de fabrication et permet de s'affranchir de dispositifs complémentaires, mousse ou rail, en fond de rainure.

Selon une première variante de réalisation, ledit moyen est constitué d'un agencement d'emboîtement parallèlement à la rainure.

Selon une seconde variante de réalisation, ledit moyen est constitué d'un agencement élastique de compression perpendiculairement à la rainure.

L'invention concerne également un dispositif de filtration pour la mise en oeuvre du procédé.

Selon un premier mode de réalisation, il comporte un dispositif d'emboîtement parallèlement à son bord coopérant avec ladite rainure.

De préférence, ledit dispositif d'emboîtement est constitué d'un pion de centrage coopérant avec une cavité réalisée dans ledit boîtier.

Outre sa fonction de positionnement, ce pion peut servir de détrompeur, c'est-à-dire de moyen de référence et de reconnaissance, dans le cas d'un dispositif de filtration non symétrique devant être obligatoirement monté selon une façon unique.

Selon un second mode de réalisation, il comporte un agencement élastique sur son bord coopérant avec la rainure destiné à venir en butée contre ledit boîtier.

De préférence, ledit agencement élastique est une lame flexible solidaire par ses deux extrémités au bord du dispositif de filtration.

Ce moyen absorbe également les éventuelles vibrations auxquelles est soumis le dispositif de filtration.

Dans le cas d'un dispositif de filtration à cadre en matière plastique surmoulé, pion et lame peuvent être issus directement du surmoulage.

De préférence, le dispositif de filtration est sensiblement rectangulaire et ledit boîtier comporte trois rainures dans lesquelles sont emboîtés trois côtés du dispositif de filtration, le quatrième côté dit côté avant étant face à une ouverture d'insertion.

Dans ce cas, de préférence, le dispositif comporte sur son côté arrière un pion de centrage coopérant avec une cavité réalisée dans ledit boîtier.

Avantageusement, le dispositif de filtration comporte sur son côté arrière au moins un moyen élastique destiné à venir en butée contre ledit boîtier.

De préférence, ledit moyen élastique est constitué de deux lames flexibles solidaires par leurs deux extrémités au bord arrière du dispositif de filtration.

L'invention est décrite ci-après plus en détail grâce à des figures ne représentant qu'un mode de réalisation préféré de l'invention.

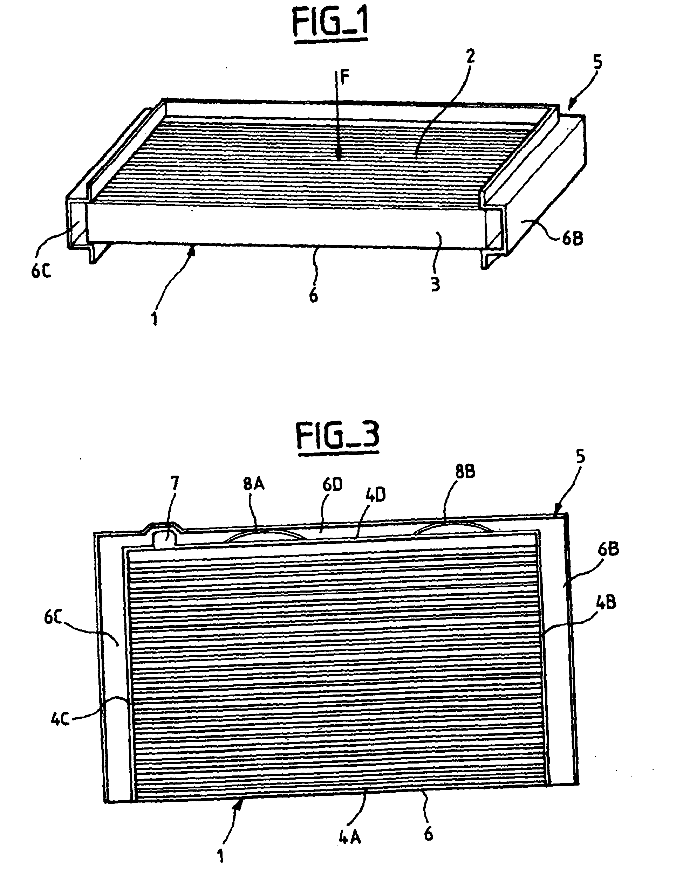

La figure 1 est une vue en perspective d'un agencement de filtration conforme à l'invention.

La figure 2 est une vue de détail de la figure 1.

La figure 3 est une vue en coupe transversale d'un tel agencement.

Un dispositif de filtration 1 tel que décrit est destiné à équiper un appareil de circulation d'air par exemple d'aération et/ou de chauffage et/ou de climatisation, en particulier pour véhicule automobile.

De façon classique, il est sensiblement rectangulaire et comporte un moyen filtrant 2 formant filtre à particules, formé d'un mat non tissé constitué d'un voile de carde en une nappe unique plissé. Généralement, ce mat est à base de fibres en matériau thermoplastique et plus précisément en polypropylène.

Ce mat est généralement associé à une grille par exemple en polypropylène placé en aval par rapport au sens F de circulation de l'air dans le dispositif de filtration 1. Selon un autre mode de réalisation, le moyen filtrant peut être pourvu de deux grilles plissées.

Cette ou ces grilles peuvent être solidarisées au mat de non tissé, au moins partiellement, par exemple par soudage aux ultrasons, par collage, par consolidation mécanique ou autre.

Un tel dispositif de filtration peut constituer un filtre à particules ou un filtre dit combiné, c'est-à-dire arrêtant également les gaz délétères. Dans ce cas, sont ajoutés des moyens d'adsorption de gaz. Ces derniers peuvent comporter un lit de charbon activé ou un tissu de carbone souple plissé de la même manière que le mat de non tissé.

Un cadre 3 est prévu pour supporter les différents composants de ce dispositif. Ce cadre 3 comprend quatre parois 4A à 4D sur lesquelles sont fixés les bords du moyen filtrant. Classiquement, ce cadre est de préférence réalisé en matière plastique.

L'appareil comporte quant à lui un boîtier 5 destiné à recevoir le dispositif de filtration 1 par translation dans une ouverture d'introduction 6.

Dans ce qui suit, le plan de cette ouverture est considéré comme l'avant de l'agencement de filtration.

Pour une bonne efficacité de l'appareil, ce boîtier 5 doit recevoir le dispositif de filtration de façon étanche.

L'étanchéité au niveau de l'ouverture d'insertion peut être réalisée par une paroi avant débordante solidaire du dispositif de filtration 1 et venant s'appliquer sur une partie correspondante du boîtier, de façon similaire à un tiroir, avec un joint intercalé qui peut être par exemple une lèvre flexible connue. Cette partie avant connue en soi n'est pas représentée sur les figures pour une meilleure représentation de l'invention.

L'invention concerne les moyens d'étanchéité et de calage des autres bords du dispositif de filtration 1.

Le moyen d'étanchéité est constitué d'un passage en labyrinthe.

Plus précisément, le boîtier 5 comporte sur ses parois latérales et arrière une rainure 6B à 6 D dans laquelle est emboîté un bord respectif 4B à 4D du dispositif de filtration 1 sur toute son épaisseur.

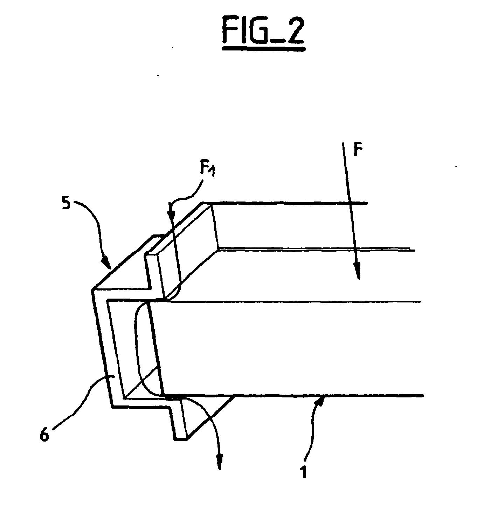

L'action de ce moyen d'étanchéité est représentée en détail sur la figure 2. Au niveau de l'emboîtement du dispositif de filtration 1 dans la rainure 6, il existe un espace entre ces deux composants. Une fuite d'air peut donc se produire. Son cheminement en labyrinthe est schématisé par la flèche F1.

Par ailleurs, le dispositif de filtration 1 comporte sur son bord arrière 4D un pion de centrage 7 coopérant avec une cavité réalisée dans la paroi arrière du boîtier 5. Comme représenté, de préférence, cette cavité est réalisée dans la paroi de fond de la rainure correspondante 6D.

Ce bord arrière 4D porte également un moyen élastique de positionnement et d'antivibration destiné à venir en butée contre le boîtier 5. Comme représenté, de préférence, ce moyen élastique est constitué de deux lames flexibles 8A et 8B solidaires par leurs deux extrémités à la paroi arrière 4D du dispositif filtrant 1.

La mise en place du dispositif de filtration 1, lors de son montage, se fait par insertion dans l'ouverture d'insertion 6 et emboîtement de ses bords latéraux 4B et 4C dans les rainures latérales du boîtier 5 (de façon similaire à un tiroir) jusqu'à butée des lames 8 contre le fond de la rainure arrière 6D du boîtier ; le pion 7 vient se placer dans la cavité correspondante du boîtier 5 assurant le centrage du dispositif 1; la paroi avant du dispositif de filtration vient alors se plaquer en face avant du boîtier.

Selon l'invention, les moyens de calage peuvent être portés par le dispositif de filtation comme ci dessus ou par le boîtier. Plus précisément, en ce qui concerne l'agencement d'emboîtement, le pion peut être solidaire du boîtier et venir s'emboîter dans une cavité réalisé dans le dispositif de filtration ; en ce qui concerne l'agencement élastique, les lames peuvent être solidaires du boîtier.

## Revendications

1. Appareil de circulation d'air équipé d'un dispositif de filtration (1) interchangeable, en particulier pour véhicule automobile, comprenant un boîtier (5) recevant le dispositif de filtration (1) de façon étanche et le boîtier (5) comportant au moins une rainure (68 à 6D) dans laquelle est emboîté un bord du dispositif de filtration (1) sur toute son épaisseur sur au moins une partie de sa périphérie,
**caractérisé en ce qu'**un positionnement du dispositif de filtration (1) est obtenu grâce à au moins un moyen de calage du dispositif de filtration (1) adapté pour garantir un emboîtement du dispositif de filtration (1) sur la rainure (6B à 6D) constitué d'un agencement élastique de compression perpendiculairement à la rainure (6B à 6D).

2. Appareil de circulation d'air selon la revendication 1, **caractérisé en ce que** ledit dispositif d'emboîtement est constitué d'un pion de centrage (7) coopérant avec une cavité réalisée dans ledit boîtier (5).

3. Appareil de circulation d'air selon la revendication 1 ou 2, **caractérisé en ce qu'**il comporte un agencement élastique (8A, 8B) sur son bord coopérant avec la rainure destiné à venir en butée contre ledit bottier (5).

4. Appareil de circulation d'air selon la revendication 3, **caractérisé en ce que** ledit agencement élastique (8A, 8B) est une lame flexible solidaire par ses deux extrémités au bord du dispositif de filtration (1).

5. Appareil de circulation d'air selon l'une des revendications précédentes, **caractérisé en ce que** le dispositif de filtration (1) est sensiblement rectangulaire et ledit boîtier (5) comporte trois rainures (6B à 6D) dans lesquelles sont emboîtés trois côtés du dispositif de filtration (1), le quatrième côté dit côté avant étant face à une ouverture d'insertion (6).

## Claims

1. Air circulation apparatus equipped with an exchangeable filtration device (1), in particular for a motor vehicle, comprising a housing (5) receiving the filtration device (1) sealingly and the housing (5) comprising at least one groove (6B to 6D) in which an edge of the filtration device (1) is recessed over its entire thickness over at least part of its periphery,
**characterised in that** a positioning of the filtration device (1) is obtained by virtue of at least one means of wedging the filtration device (1) adapted to guarantee recessing of the filtration device (1) on the groove (6B to 6D) consisting of an elastic compression arrangement perpendicular to the groove (6B to 6D).

2. Air circulation apparatus according to claim 1, **characterised in that** said recessing device consists of a centring stud (7) cooperating with a cavity produced in said housing (5).

3. Air circulation apparatus according to claim 1 or 2, **characterised in that** it comprises an elastic arrangement (8A, 8B) on its edge cooperating with the groove intended to come into abutment against said housing (5).

4. Air circulation apparatus according to claim 3, **characterised in that** said elastic arrangement (8A, 8B) is a flexible blade secured by the two ends thereof to the edge of the filtration device (1).

5. Air circulation apparatus according to one of the preceding claims, **characterised in that** the filtration device (1) is substantially rectangular and said housing (5) comprises three grooves (6B to 6D) in which three sides of the filtration device (1) are recessed, the fourth side, referred to as the front side, facing an insertion opening (6).

## Patentansprüche

1. Luftzirkulationsgerät, ausgestattet mit einer austauschbaren Filtervorrichtung (1), insbesondere für Kraftfahrzeuge, umfassend ein Gehäuse (5), das die Filtervorrichtung (1) auf dichte Weise aufnimmt, und wobei das Gehäuse (5) mindestens eine Nut (6B bis 6D) umfasst, in die ein Rand der Filtervorrichtung (1) in seiner ganzen Stärke auf mindestens einem Teil seines Umfangs eingefügt ist,
**dadurch gekennzeichnet, dass** eine Positionierung der Filtervorrichtung (1) dank mindestens eines Klemmmittels der Filtervorrichtung (1) erzielt wird, angepasst, um eine Einfügung der Filtervorrichtung (1) in die Nut (6B bis 6D) sicherzustellen, bestehend aus einer elastischen Druckanordnung senkrecht zur Nut (6B, 6D).

2. Luftzirkulationsgerät nach Anspruch 1, **dadurch gekennzeichnet, dass** die Einfügungsvorrichtung aus einem Zentrierzapfen (7) besteht, der mit einem Hohlraum, durchgeführt in dem Gehäuse (5), zusammenarbeitet.

3. Luftzirkulationsgerät nach Anspruch 1 oder 2, **dadurch gekennzeichnet, dass** es eine elastische Anordnung (8A, 8B) auf seinem Rand umfasst, die mit der Nut zusammenarbeitet, dazu geeignet, als Anschlag gegen das Gehäuse (5) zu dienen.

4. Luftzirkulationsgerät nach Anspruch 3, **dadurch gekennzeichnet, dass** die elastische Anordnung (8A, 8B) eine flexible Klinge ist, die an ihren zwei Enden mit dem Rand der Filtervorrichtung (1) fest verbunden ist.

5. Luftzirkulationsgerät nach einem der vorhergehenden Ansprüche, **dadurch gekennzeichnet, dass** die Filtervorrichtung (1) im Wesentlichen rechtwinklig ist und das Gehäuse (5) drei Nuten (6B bis 6D) aufweist, in die drei Seiten der Filtervorrichtung (1) eingefügt sind; wobei die vierte Seite, genannt Vorderseite, einer Einführungsöffnung (6) gegenüberliegt.
